Europäisches Patentamt

European Patent Office

Office européen des brevets

(11) Publication number: **0 309 266**
**A2**

## EUROPEAN PATENT APPLICATION

(21) Application number: 88308847.8

(22) Date of filing: 23.09.88

(51) Int. Cl.⁴: **C 01 B 31/36**

(30) Priority: 23.09.87 US 100085

(43) Date of publication of application:
29.03.89 Bulletin 89/13

(84) Designated Contracting States:
AT BE CH DE ES FR GB GR IT LI LU NL SE

(71) Applicant: **Goksel, Mehmet Adnan**
**505 West Douglas Avenue**
**Houghton Michigan 49931 (US)**

(72) Inventor: **Goksel, Mehmet Adnan**
**505 West Douglas Avenue**
**Houghton Michigan 49931 (US)**

(74) Representative: **Knott, Stephen Gilbert et al**
**MATHISEN, MACARA & CO. The Coach House 6-8**
**Swakeleys Road**
**Ickenham Uxbridge Middlesex UB10 8BZ (GB)**

(54) Process for producing carbon-containing agglomerates of siliceous material and silicon carbide therefrom.

(57) Self-reducing aggolmerates of a siliceous material are produced by preparing a moistened mixture of a finely-divided siliceous material containing free $SiO_2$, such as silica sand, a finely-divided carbonaceous material, such as coke, in an amount sufficient to react with a substantial amount of the available $SiO_2$ and form silicon carbide, and a bonding agent, such as burned lime, forming this mixture into green agglomerates and hydrothermally hardening the green agglomerates by contacting them with steam under pressure. The available $SiO_2$ in the hardened agglomerates can be converted to silicon carbide by heating the agglomerates in a shaft furnace or the like to a temperature of at least 1832 ° F (1000 ° C).

EP 0 309 266 A2

Bundesdruckerei Berlin

## Description

# PROCESS FOR PRODUCING CARBON-CONTAINING AGGLOMERATES OF SILICEOUS MATERIAL AND SILICON CARBIDE THEREFROM

This invention relates to the production of carbon-containing agglomerates of siliceous materials and the use of such agglomerates to produce silicon carbide.

Silicon is an important alloying ingredient for cast iron. In one alloying technique, it is incorporated into iron by adding silicon carbide as part of the charge to a cupola, electric furnace or the like.

In a conventional, process silicon carbide is produced by introducing a mixture of pure silicon sand, low ash coke, saw dust and sodium chloride into a resistance electric furnace. This charge is heated in the furnace to a temperature ranging from about 2000 to 2400° C for up to 36 hours. The rate of reaction can only be slightly accelerated by increasing the temperature. After cooling for about twenty-four hours, the usable silicon carbide is picked out of the furnace, crushed, classified and the fines are marketed as is or in briquette form. Thus, this process is quite expensive and time consuming.

An object of the invention is to provide an inexpensive process for producing silicon carbide.

Another object of the invention is to provide self-reducing agglomerates of siliceous materials which can be used in the production of silicon carbide and other applications and a process for producing same.

A further object of the invention is to provide self-reducing agglomerates of siliceous materials having sufficient strength to withstand handling and transportation and to remain intact upon being heated to elevated temperatures.

In accordance with one aspect of the invention, self-reducing agglomerates of a siliceous material are produced by preparing a moistened mixture including a finely divided siliceous material containing free $SiO_2$, a finely divided carbonaceous material in an amount to convert at least a substantial amount of the available $SiO_2$ in the siliceous material to silicon carbide and about 0.1 to about 25 weight % of a bonding agent capable of reacting with the available $SiO_2$ to form silicate and/or hydrosilicate bonds therewith, forming the resulting mixture into discrete, green agglomerates and hydrothermally hardening the green agglomerates into hardened, integrally bonded masses.

In accordance with another aspect of the invention, the resulting self-reducing agglomerates are heated in an electric furnace, a shaft furnace or the like to an elevated temperature of at least 1000° C to convert all or at least a substantial portion of the available $SiO_2$ to silicon carbide.

A starting mixture is first prepared by thoroughly blending together a siliceous material, a carbonaceous material, a bonding agent and a sufficient amount of water to form a moistened mixture capable of being formed into discrete, agglomerated masses. If desired, the constituents of the starting mixture can be blended together in dry form and then moistened or added together with water and blended to form a homogeneous dispersion.

Natural or artificial siliceous materials containing available free $SiO_2$ can be used. Suitable siliceous materials include finely ground quartz, silica sand, bentonite, diatomaceous earth, fuller's earth, sodium, calcium, magnesium and aluminum silicates, pyrogenic silica, and mixtures thereof. Of these, finely ground quartz and silica sand are preferred.

Suitable carbonaceous materials include both agglomerating and non-agglomerating coals, such as coking and non-coking, bituminous coals, anthracite coals and lignite and various forms of pyrolyzed carbon, such as coke breeze, petroleum coke, bituminous and anthracite coal char, lignite char, wood char, graphite and the like. Lesser volatile coals and chars are preferred because they generally provide higher compressive strengths for the agglomerates.

The primary function of the carbonaceous material is to supply internal carbon for converting the available free $SiO_2$ in the siliceous material to silicon carbide. Accordingly, the minimum amount used corresponds to that needed to supply an amount of available carbon (fixed carbon content) sufficient to convert at least a substantial portion of the available $SiO_2$ to silicon carbide, thereby eliminating the need for external carbon during the heating step. The amount of carbonaceous material used preferably is in excess of the calculated stoichiometric amount, for example, up to about 60 weight %, based on the total weight of the dry solids, in order to maximize the degree to silicon carbide formation and to accelerate the rate of conversion of $SiO_2$ to silicon carbide in accordance with Equation (1) below. Generally, the amount of carbonaeous material is about 30 to about 60, preferably about 40 to 55 weight %.

Suitable bonding agents include oxides, hydroxides and carbonates of calcium and magnesium and mixtures thereof. Burned lime (CaO) and hydrated lime ($CaOH_2$) are preferred.

The amount of bonding agents used is about 0.1 to about 25 weight %, based on the total weight of the dry solids in the starting mixture. When less than about 0.1 weight % of bonding agent is used, the hardened agglomerates do not have sufficient crush resistance or compressive strength to withstand the loads normally imposed thereon during handling, storage and transportation. On the other hand, amounts of the bonding agent in excess of about 25 weight % do not appreciably increase the compressive strength and can dilute the concentration of silicon dioxide in the final agglomerates to an undesirable level. The preferred amount of bonding agent is about 5 to about 10 weight %.

Strengthening agents can be included in the starting mixture to further increase the strength of the hardened agglomerates. For example, oxides, hydroxides, carbonates, bicarbonates, sulfates, bisulfates and

2

borates of alkali metals (e.g., potassium and sodium) and mixtures thereof can be added in amounts ranging up to about 3 weight %. Of these, sodiumhydroxide, sodium carbonate and sodium bicarbonate are preferred. The presence of an alkali metal may be undesirable in some applications. In those cases, a strengthening agent can be omitted without significantly reducing the strength of the agglomerates. When used, the preferred amount of the strengthening agent is about 0.15 to about 1 weight %.

The amount of water included in the starting mixture varies, depending on the physical characteristics of the materials and the particular agglomeration technique employed. For example, when a pelletizing process employing a conventional balling drum or disc is used to form spherical pellets, the total amount of water in the moistened starting mixture generally should be about 5 to about 20 weight %, preferably about 10 to about 15 weight %, based on the total weight of the starting mixture (dry basis). On the other hand, when a briquetting press is used, the amount of water in the moistened starting mixture generally should be about 3 to about 15, preferably about 5 to about 10 weight %.

The average particle size of the various solid materials included in the starting mixture generally can range from about 3 to about 325 mesh with all preferably being less than about 100 mesh. Particle sizes coarser than about 3 mesh make it difficult to obtain a homogeneous mixture of the constitutents and, in some cases, can produce insufficient surface area to obtain the requisite strength bond in the hardened agglomerates. Also, finer particles increase the surface area contact between the siliceous and carbonaceous materials and increase the rate of conversion of $SiO_2$ to silicon carbide in accordance with Equation (1) below. Furthermore, it is difficult to form pellets from mixtures containing coarser particles. Preferably, at least half of all solids materials in the starting mixture has an average particle size less than about 100 mesh for pelletizing. Briquettes can be produced from coarser particles.

Most carbonaceous materials, particularly the pyrolyzed type, have many small, capillary-like pores or cavities which tend to absorb water during the mixing step. This free internal moisture tends to expand in volume due to a change in temperature and to be converted to steam during the hydrothermal hardening step. This can cause a change in the structure of the particles and, consequently, a reduction of compressive strength for the resulting agglomerates and sometimes cracking or bursting when excessive amounts are present in the pores of cavities. If overburned lime is present in the mixture, it can cause a volume expansion and cracking of the agglomerates due to a slow hydration of the overburned lime with water. These problems can be minimized by allowing the moistened mixture to rest, age or stand a sufficient time for a substantial portion of the free internal moisture in the carbonaceous material to migrate from the pores or cavities to the surface of the particles and/or for the overburned lime to hydrate.

This step can be performed at ambient temperatures because it is not necessary to actually evaporate the moisture from the mixture. The time and conditions for this step can vary considerably depending primarily on the type of carbonaceous material, bonding agent used and whether overburned lime is present. For instance, coke breeze and char generally are more porous than bituminous or anthracite coal or graphic fines and, consequently, absorbs more moisture and require a longer standing time. Removal of excess internal moisture from the pores or cavities in the carbonaceous material or hydration of the overburned lime can be accelerated by heating the moistened mixture to an elevated temperature.

When burned lime and/or magnesium oxide is used as the bonding agent, they react with the moisture present to form hydrates. This exothermic hydration reaction tends to accelerate migration of the free internal moisture to the particle surfaces, resulting in a shortening of the standing time required without external heating.

As a general guide, the moistened mixture, prior to agglomeration, is allowed to stand for about 0.5 to about 48 hours, preferably about 1 to about 3 hours, at a temperature of about 60 to about 90° C. Higher temperatures and pressures can be used, but are less desirable because of higher operational costs. When burned lime or magnesium oxide is used as the bonding agent, the moistened mixture preferably is placed on a closed, thermally insulated container to take advantage of the exothermic hydration reaction.

After this resting, aging or standing step, the moistened mixture is formed into green agglomerates of a desired size and shape for the intended end use by a conventional agglomeration technique, such as molding, briquetting, pelletizing, extruding and the like. Pelletizing with a balling disc or drum is preferred because of the lower operating costs. When in the form of spherical pellets, the green agglomerates generally have a diameter of about 1 to about 75 mm, preferably about 15 to about 40 mm. When briquetting is used, the agglomerates preferably are in a spherical-like or egg shape and have a major diameter ranging up to about 100 mm. Larger pellets and briquettes can be used if desired.

The crush resistance or compressive strength of the hardened agglomerates can be increased by drying the green agglomerates to a free moisture content of about 5 weight % or less, preferably about 3 weight % or less, prior to the hydrothermal hardening step. This drying can be accomplished by conventional means, such as by placing the green agglomerates in an oven or by blowing a heated gas thereover, using drying temperatures up to the decomposition temperature of the carbonaceous material. The time required to reduce the free moisture content to about 5 weight % or less depends upon the drying temperature used, the moisture content of the green agglomerates, flow rate of the drying gas, the level at which the moisture content is reduced, size and shape of the green agglomerates, etc.

The green agglomerates are introduced into a reaction chamber or pressure vessel, such as an autoclave, wherein they are heated to an elevated temperature in the presence of moisture to effect a hardening and bonding of the individual particles into an integral, high strength mass. The compressive strength of the hardened agglomerates produced by this hydrothermal hardening step depends to some extent upon the temperature, time, amount of carbonaceous material and bonding agent, and the moisture content of the atmosphere used.

The application of heat to the green agglomerates can be achieved by any one of a number of methods. The use of steam is preferred because it simultaneously provides a source of heat and moisture necessary for the hydrothermal reaction. Either saturated or substantially saturated steam can be used. Superheated steam tends to produce hardened agglomerates having reduced strengths. Therefore, steam at temperatures and pressures at or close to that of saturated steam is preferred. Temperatures generally ranging from about 100 to about 250° C, preferably about 200 to about 225° C, can be satisfactorily employed to achieve the desired hardening of the green agglomerates within a reasonable time.

Autoclaving pressures substantially above atmospheric pressure are preferred in order to decrease the hardening time and to improve the strength of the hardened agglomerates. Generally, economic conditions dictate that the maximum pressure should not exceed about 35 atmospheres and a pressure of about 10 to about 25 atmospheres is preferred.

The retention time of the agglomerates in the reaction chamber or pressure vessel depends on several process variables, such as pressure, temperature, atmosphere of the chamber, size and composition of the agglomerates, etc. In any case, this time should be sufficient for the bonding agent to form silicate and/or hydrosilicate bonds with available $SiO_2$ in the siliceous material and bond the individual particles together into a hardened, high strength condition. When higher temperatures and pressures are used, the time for hydrothermal hardening generally is about 5 minutes to about 15 hours, preferably about 30 to about 60 minutes.

Since the hydrothermal hardening step takes place at a temperature below the decomposition temperature of the carbonaceous material and in a neutral steam atmosphere, there is no oxidation of the carbonaceous material and the fixed carbon content thereof remains available to convert $SiO_2$ in the siliceous material to silicon carbide.

The hardened agglomerates are removed from the reaction chamber (autoclave) and, upon cooling, are ready for use. The hot, hardened agglomerates usually contain up to about 1.5 % free moisture and have compressive strength characteristics suitable for most uses. The compressive strength of the hardened agglomerates can be increased by rapidly drying them, preferably immediately after removal from the reaction chamber and prior to appreciable cooling, to remove substantially all of the free moisture therefrom. This drying can be accomplished in a conventional manner, such as placing the hot, hardened agglomerates in an oven or by blowing a hot gas thereover. Generally, temperatures from about 100 to about 350° C, preferably about 150 to 200° C, can be used for this post-hardening drying step.

The hardened agglomerates can be converted to silicon carbide by heating in a shaft furnace, an electric furnace or the like to a temperature of at least 1000° C for a time sufficient for a substantial portion of the available $SiO_2$ in the siliceous material to react with the available carbon in the carbonaceous material to form silicon carbide in accordance with the following overall equation:

$$SiO_2 + 3C \rightarrow SiC + 2\,CO \quad (1)$$

Because of the large surface area contact between $SiO_2$ and carbon in the agglomerates, silicon carbide can be formed within a relatively short time at temperatures as low as 1,832 ° F (1000° C). With reduction temperatures in the range of about 2,732° F (1500° C) to about 3000° F (1667° C), a substantial amount of the free $SiO_2$ in agglomerates containing at least a stoichoimetric amount of carbon can be converted to SiC with reduction times (residence time in a heating zone) of about 15 to about 60 minutes. The rate at which silicon carbide forms increases as the temperature increases. For instance, at a temperature of 3000° F (1667° C), approximately 49 % of the $SiO_2$ can be converted to silicon carbide within 60 minutes.

Without further elaboration, it is believed that one skilled in the art, using the preceding description, can utilize the invention to its fullest extent. The following examples are presented to illustrate preferred embodiments of the invention and should not be construed as limitations thereto.

## EXAMPLE 1

A batch of carbon-containing silicon dioxide pellets was prepared by combining 55 weight % quartz (-325 mesh), 40 weight % coke fines (90% -325 mesh) and 5 weight % burned lime (CaO), based on the total weight on a dry basis, and mixing in an intensive roller mixer with an additional 10 weight % water, based on total dry weight of the mixture, for sufficient time to obtain a uniformly moist blend. The moistened mixture was allowed to stand for approximately 2 hours in a closed container heated to 80° C. The moistened mixture was then formed into 15 mm diameter spherical pellets with a conventional balling device. The green pellets were dried to a moisture content of about 1 % and then hydrothermally hardened in a high pressure steam autoclave at a pressure of 300 psig (20 atm) for 1 hour.

After cooling, the hardened pellets were dried in an oven to remove substantially all the free moisture. Randomly selected hardened pellets were tested for compressive strength with a Dillon tester and the average compressive strength was 348 lbs.

Other pellets in this batch were heated in an electric tube furnace at different temperatures and for different time periods. Measurements were made for a weight loss proportional to silicon carbide formation in accordance with Equation (1) above. The results from these tests are summarized in Table I.

## TABLE I

### SiC Formation by Heating C-Containing SiO₂ Pellets

|  | Weight Loss Proportional to SiC, wt. % | | | |
|---|---|---|---|---|
| Heating times, min. | 5 | 15 | 30 | 60 |
| Temperatures, °F | | | | |
| 2000 (1093° C) | 3.69 | 3.71 | 4.06 | 4.34 |
| 2400 (1316° C) | 4.92 | 6.25 | 7.53 | 9.95 |
| 2600 (1427° C) | 7.03 | 10.94 | 12.47 | 22.60 |
| 3000 (1649° C) | -- | -- | -- | 45.83 |

In the test where pellets were heated to 3000° F (1649° C) for 60 minutes, typical silicon carbide crystals were observed on the surface and a chemical analysis of the pellet showed 49.0 weight % of silicon carbide. The formation of silicon carbide by heating carbon-containing silicon dioxide pellets of the invention was verified by X-ray diffraction analysis.

From these tests, it can be seen that a considerable amount of silicon carbide can be formed at temperatures as low as 2000° F (1093° C) and that the formation of silicon carbide increases rapidly at higher temperatures, even with time periods substantially less than 1 hour.

## EXAMPLE 2

In another test, briquettes were formed from a starting mixture having the same composition as that in Example 1. The starting mixture and green briquettes were treated in the same manner as is Example 1, except that the compressive strength tests were not made on the hardened briquettes.

Separate samples of briquettes including the following particle size silica were prepared: (1) 100% -325 mesh, (2) 70% - 325 mesh, and (3) all coarser than 325 mesh. These briquettes were heated to 2600° F (1427° C), held at that temperature for 15 minutes and then cooled. The weight loss was determined and found to be 10.7% for (1), 10.05% for (2) and 7.38% for (3).

The results from this test indicate that the rate of conversion to silicon carbide increases with materials of finer particle size.

## EXAMPLE 3

Tests were run to demonstrate silicon pick up from silicon carbide-forming pellets at higher temperatures. Pellets from Example 1 heated to 2600° F (1427° C) for 15 minutes were used in these tests. A steel rod having a known composition was cut into two parts, Part A weighing 218 g and Part B weighing 296 g. Part A of the steel rod was melted in a plasma arc furnace and 40.39 g of the silicon carbide-forming pellets were added and melted therewith for 60 minutes (Run 1). In another test, Part B of the steel rod was melted in the furnace and 80.04 g of the same pellets were added and melted therewith for 60 minutes (Run 2). After cooling, the resulting metals were analyzed and the results are summarized in Table II.

TABLE II

Steel Melts with SiC Pellets of Invention

| | Composition, wt. % | | |
| --- | --- | --- | --- |
| | Carbon | Silicon | Sulfur |
| Steel rod | 0.19 | 0.07 | 0.035 |
| Run 1 | 1.53 | 4.01 | 0.019 |
| Run 2 | 2.70 | 6.49 | 0.010 |

From these tests, it can be seem that silicon is formed from reduced carbon-containing silicon dioxide pellets and becomes part of the hot metal. The amount of silicon incorporated into the hot metal can be adjusted by changing the weight proportions of the pellets and metal. Also, due to the presence of lime and carbon in the pellets, some of the sulfur was removed from the hot melt.

If these pellets are introduced into a cupola or electric furnace along with scrap metal, silicon generated from the pellets is incorporated into the hot metal.

## Claims

1. A process for producing hardened, discrete, self-reducing agglomerates of a siliceous material comprising the steps of
   (a) preparing a moistened starting mixture including a finely-divided siliceous material containing free $SiO_2$, a finely-divided carbonaceous material in an amount sufficient to react with at least a substantial portion of the available free $SiO_2$ in said siliceous material and form silicon carbide and about 0.1 to about 25 weight %, based on the total dry weight of the solids in said mixture, of a finely divided bonding agent capable of reacting with the available free $SiO_2$ in said siliceous material to form silicate and/or hydrosilicate bonds therewith;
   (b) forming discrete, green agglomerates from said mixture; and
   (c) hydrothermally hardening said green agglomerates under conditions whereby substantially all of the fixed carbon in said carbonaceous material remains available and said bonding agent reacts with available $SiO_2$ in said siliceous material to form hydrate and/or hydrosilicate bonds therewith.

2. A process according to Claim 1 wherein said siliceous material is selected from quartz, silica sand, bentonite, diatomaceous earth, fuller's earth, sodium silicate, calcium silicate, aluminium silicate, pyrogenic silica, and mixtures thereof.

3. A process according to Claim 1 or Claim 2, wherein step (c) is carried by contacting said agglomerates with steam at a temperature of about 100 ro about 250° C.

4. A process according to any one of Claims 1 to 3, wherein said bonding agent is selected from the oxides, hydroxides and carbonates of calcium and magnesium and mixtures thereof.

5. A process according to Claim 4, wherein said bonding agent is calcium oxide or calcium hydroxide, and said starting mixture contains about 5 to about 10 weight % thereof.

6. A process according ro any one of rhe preceding Claims, wherein the amount of the fixed carbon in said carbonaceous material is in excess of that required to convert all of the available free $SiO_2$ to silicon carbide.

7. A process according to any one of the preceding Claims, wherein said starting mixture contains a sufficient amount of said carbonaceous material to provide a total fixed carbon content in said starting mixture of up to about 60 weight %, based on the total weight of the dry solids.

8. A process for producing silicon carbide comprising the steps of
   (a) forming hardened agglomerates from a mixture including a siliceous material containing free $SiO_2$, a finely-divided carbonaceous material in an amount at least sufficient to convert a substantial portion of the available $SiO_2$ in said siliceous material to silicon carbide and a bonding agent;
   (b) introducing said agglomerates into a heating vessel, and
   (c) heating said agglomerates in the vessel at a temperature of at least about 1000° C for a time sufficient for the available free $SiO_2$ in the siliceous material to react with the fixed carbon in the carbonaceous material to produce silicon carbide.

9. A process according to Claim 8, wherein said bonding agent is capable of reacting with the available free $SiO_2$ in said siliceous material to form silicate and/or hydrosilicate bonds therewith.

10. A process according to Claim 9, wherein said bonding agent is selected from the oxides, hydroxides and carbonates of calcium and magnesium and mixtures thereof.

11. A process according to Claim 10, wherein said bonding agent is calcium oxide or calcium hydroxide and said starting mixture contains about 0.1 to about 25 weight % thereof.

12. A process according to any one of Claims 8 to 11, wherein said siliceous material is quartz, silica sand or a mixture thereof.

6

13. A process according to any one of Claims 8 to 12, wherein the amount of fixed carbon in said carbonaceous material is in excess of that required to convert all the available free $SiO_2$ to silicon carbide.

14. A process according to any one of Claims 8 to 13, wherein the amount of said carbonaceous material is about 30 to about 60 weight %.